# FASCICULE DE BREVET EUROPEEN

(11) **EP 4 264 136 B1**
(45) Date de publication et mention de la délivrance du brevet: **25.02.2026**
(21) Numéro de dépôt: 21839907.9
(22) Date de dépôt: 15.12.2021
(51) Int. Cl.: F24D 19/10, F24F 11/00, F24F 11/80, G05D 23/19, F24F 110/10, F24F 110/20, F24F 140/40

(54) **PROCÉDÉ DE GESTION THERMIQUE D'UNE ZONE D'UN BÂTIMENT ET INSTALLATION DE GESTION THERMIQUE POUR METTRE EN OEUVRE LEDIT PROCÉDÉ**
VERFAHREN ZUR WÄRMEVERWALTUNG FÜR EINEN BEREICH EINES GEBÄUDES UND WÄRMEVERWALTUNGSANLAGE ZUR DURCHFÜHRUNG DES VERFAHRENS
THERMAL MANAGEMENT METHOD FOR AN AREA OF A BUILDING AND THERMAL MANAGEMENT FACILITY FOR CARRYING OUT THE METHOD

(30) Priorité: 18.12.2020 FR 2013632
(43) Date de publication de la demande: 25.10.2023
(73) Titulaire: Somfy Activites SA, 74300 Cluses (FR)
(72) Inventeur: HODIN, Guillaume, 74300 Cluses (FR); CAVAREC, Pierre-Emmanuel, 74300 Cluses (FR); ARNAUD, David, 74300 Cluses (FR); ROBIN, Frédéric, 74300 Cluses (FR); ROBIN, Serge, 74300 Cluses (FR); GERINIERE, Pierre, 74300 Cluses (FR)
(74) Mandataire: Bugnion Genève
(86) Numéro de dépôt international: PCT/EP2021/085931
(87) Numéro de publication internationale: WO 2022/129194

(56) Documents cités:
- EP-A1- 3 267 121
- KR-A- 20200 077 456
- US-A1- 2016 377 305

## Description

La présente invention concerne un procédé de gestion thermique d'une zone d'un bâtiment et une installation de gestion thermique pour mettre en œuvre ledit procédé. Dans le domaine de la gestion thermique d'un bâtiment, il est connu d'utiliser un thermostat afin de maintenir une température relativement stable dans une zone du bâtiment.

A cet effet, le thermostat comporte un capteur de température et éventuellement un capteur d'humidité, tous deux intégrés dans le thermostat.

En fonction des retours de ces capteurs et des consignes données par l'utilisateur, le thermostat réagit en pilotant une chaudière, des vannes thermostatiques, des actionneurs de chauffages, etc.

Le thermostat est généralement installé dans une pièce principale de la zone que l'on souhaite gérer thermiquement, et des capteurs de températures et d'humidité peuvent être installés dans des pièces auxiliaires de la zone du bâtiment.

Une communication entre ces capteurs et le thermostat central permet au thermostat de réguler la température dans la pièce principale dans laquelle il est installé mais aussi dans les pièces auxiliaires de la zone, en fonction des retours des capteurs.

Lorsque les différentes pièces de la zone d'un bâtiment peuvent être séparées par une porte, il est avantageux, dans une démarche d'optimisation de la consommation énergétique, de fermer les portes des pièces qui ne sont pas utilisées et de couper le chauffage dans les pièces qui ne sont pas utilisées.

Toutefois, lorsqu'une porte séparant une pièce chauffée d'une pièce non chauffée est ouverte, la température dans la pièce chauffée diminue sensiblement. Cela est problématique notamment lorsque la zone du bâtiment que l'on cherche à gérer thermiquement est une surface relativement importante car la porte séparant une pièce chauffée d'une pièce non chauffée a pu rester ouverte par inadvertance. D'autre part, la gestion thermique de la zone du bâtiment par le biais du thermostat central peut alors être complexe, avec le risque de chercher à compenser les écarts de température entre les pièces et de surchauffer certaines zones.

Le document EP3267121A1 divulgue un procédé de gestion thermique d'une zone de bâtiment.

La présente invention vise à surmonter les inconvénients ci-dessus, et concerne pour ce faire un procédé de gestion thermique d'une zone d'un bâtiment, ladite zone comportant une pièce principale et au moins une pièce auxiliaire séparée de ladite pièce principale par au moins un ouvrant intérieur, ladite zone comportant une installation de gestion thermique comprenant :
- au moins un dispositif de chauffage et/ou de climatisation ;
- une unité de commande du dispositif de chauffage et/ou de climatisation, notamment un thermostat, installée dans ladite pièce principale, comprenant au moins un capteur de température apte à mesurer la température de l'air à l'intérieur de ladite pièce principale ;
- au moins un détecteur d'état d'ouverture et de fermeture dudit au moins un ouvrant intérieur, comprenant au moins un capteur de température apte à mesurer la température de l'air à l'intérieur de ladite au moins une pièce auxiliaire ;
- un moyen de communication entre ladite unité de commande et ledit au moins un détecteur d'état d'ouverture et de fermeture ;
ledit procédé de gestion thermique comprenant :
- une étape de mesure, par les capteurs de température, des températures de l'air à l'intérieur de ladite pièce principale et de ladite au moins une pièce auxiliaire ;
- une étape de détection de l'état ouvert ou fermé dudit au moins un ouvrant intérieur ;
- une étape d'analyse des températures de l'air mesurées et de l'état d'ouverture ou de fermeture dudit au moins un ouvrant intérieur ;
- une étape d'utilisation des résultats de l'étape d'analyse pour indiquer à un utilisateur dudit procédé au moins une action corrective à effectuer visant à améliorer les gains thermiques de ladite zone.

L'étape E3 peut comporter une comparaison des mesures de températures de l'air mesurées dans la pièce principale et dans la pièce auxiliaire.

Selon des caractéristiques optionnelles du procédé de l'invention :
- ladite au moins une action corrective comporte au moins les indications suivantes : faire passer ledit au moins un ouvrant intérieur depuis son état ouvert, respectivement fermé, vers son état fermé, respectivement ouvert, et/ou couper l'alimentation d'un dispositif de chauffage et/ou de climatisation dans au moins une pièce auxiliaire ;
- lorsque l'étape d'analyse retourne, d'une part, une différence entre les températures de l'air mesurées à l'intérieur de ladite pièce principale et de ladite au moins une pièce auxiliaire qui dépasse une valeur seuil prédéterminée et, d'autre part, un état d'ouverture dudit au moins un ouvrant intérieur, le procédé comprend en outre une étape d'itération des étapes de mesure et de détection jusqu'à ce que l'étape d'analyse retourne une différence entre lesdites températures de l'air mesurées inférieure à ladite valeur seuil prédéterminée ;
- l'étape d'itération est mise en œuvre après une temporisation, notamment comprise entre environ dix secondes et environ cinq minutes ;
- dans l'étape d'analyse de l'état d'ouverture ou de fermeture dudit au moins un ouvrant intérieur, on effectue une cartographie de la zone représentative de l'état d'ouverture ou de fermeture dudit au moins un ouvrant intérieur ;
- l'unité de commande comprend en outre au moins un capteur d'humidité apte à mesurer le taux d'humidité de l'air à l'intérieur de ladite pièce principale et ledit au moins un détecteur d'état d'ouverture et de fermeture dudit au moins un ouvrant intérieur comprend en outre au moins un capteur d'humidité apte à mesurer le taux d'humidité de l'air à l'intérieur de ladite au moins une pièce auxiliaire, et les étapes de mesure et d'analyse comportent respectivement la mesure par les capteurs d'humidité des taux d'humidité de l'air à l'intérieur de ladite pièce principale et de ladite au moins une pièce auxiliaire, et l'analyse des taux d'humidité de l'air mesurés et de l'état d'ouverture ou de fermeture dudit au moins un ouvrant intérieur ;
- en variante, ledit au moins un détecteur d'état d'ouverture et de fermeture dudit au moins un ouvrant intérieur comprend en outre au moins un capteur d'humidité apte à mesurer le taux d'humidité de l'air à l'intérieur de ladite au moins une pièce auxiliaire, et le procédé comprend en outre une étape de détermination de l'humidité absolue dans ladite au moins une pièce auxiliaire ;
- de la sorte, ladite au moins une action corrective comporte l'indication de fermer au moins un ouvrant extérieur communiquant vers l'extérieur du bâtiment depuis ladite au moins une pièce auxiliaire lorsqu'une chute de l'humidité absolue est détectée lors de l'étape de détermination.

L'invention concerne également une installation de gestion thermique comprenant :
- un dispositif de chauffage et/ou de climatisation ;
- une unité de commande du dispositif de chauffage et/ou de climatisation, notamment un thermostat, comprenant au moins un capteur de température apte à mesurer la température de l'air ;
- au moins un détecteur d'état d'ouverture et de fermeture dudit au moins un ouvrant intérieur, comprenant au moins un capteur de température apte à mesurer la température de l'air ;
- un moyen de communication entre ladite unité de commande et ledit au moins un détecteur d'état d'ouverture et de fermeture ;
- un moyen logiciel mettant en œuvre le procédé de gestion thermique selon l'invention.

L'invention concerne aussi une installation de gestion thermique comprenant :
- un dispositif de chauffage et/ou de climatisation ;
- une unité de commande du dispositif de chauffage et/ou de climatisation, notamment un thermostat, comprenant au moins un capteur de température apte à mesurer la température de l'air et au moins un capteur d'humidité apte à mesurer le taux d'humidité de l'air ;
- au moins un détecteur d'état d'ouverture et de fermeture dudit au moins un ouvrant intérieur, comprenant au moins un capteur de température apte à mesurer la température de l'air et au moins un capteur d'humidité apte à mesurer le taux d'humidité de l'air ;
- un moyen de communication entre ladite unité de commande et ledit au moins un détecteur d'état d'ouverture et de fermeture ;
- un moyen logiciel mettant en œuvre le procédé de gestion thermique selon l'invention.

D'autres caractéristiques, buts et avantages de l'invention apparaîtront à la lecture de la description détaillée qui suit pour la compréhension de laquelle on se reportera aux dessins annexés dans lesquels :
[Fig. 1] représente un bâtiment équipé d'une installation de gestion thermique selon l'invention.
[Fig. 2] est un ordinogramme d'un mode d'exécution du procédé de gestion thermique de l'invention.

Sur l'ensemble des figures, des références identiques ou analogues représentent des organes ou ensembles d'organes identiques ou analogues.

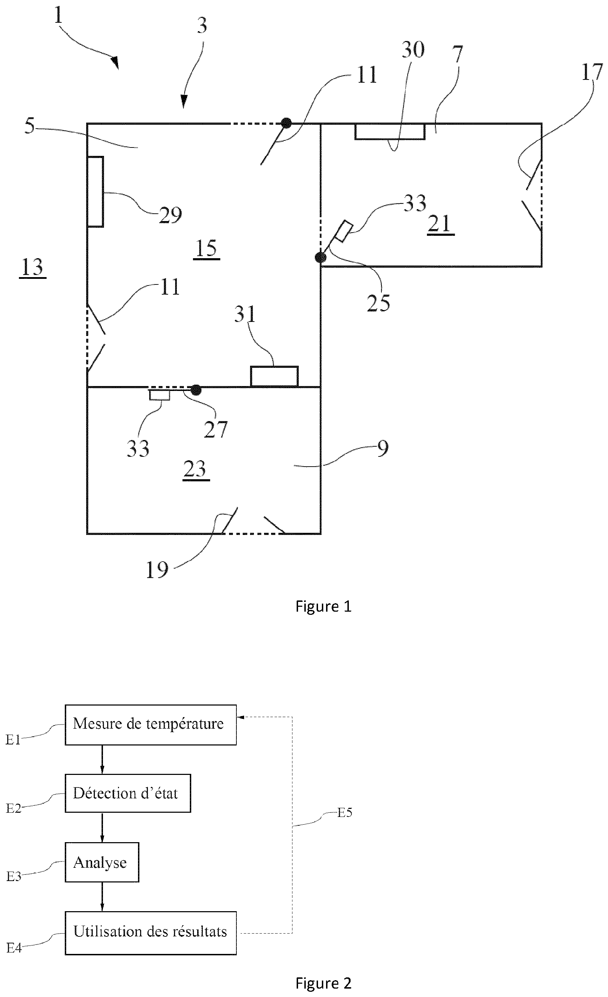

On se réfère à la figure 1 illustrant une zone 3 d'un bâtiment 1, par exemple un plateau du bâtiment.

Le bâtiment 1 peut être un bâtiment d'habitation ou un bâtiment commercial, par exemple un bâtiment de bureau ou un bâtiment industriel.

La zone 3 du bâtiment 1 comporte par exemple une compartimentation comprenant dans l'exemple représenté une pièce principale 5 et deux pièces auxiliaires 7, 9.

Dans l'exemple de réalisation non limitatif donné aux figures, la pièce principale 5 comporte une pluralité d'ouvrants dits « extérieurs » 11 permettant dans leur configuration ouverte un échange d'air entre le milieu extérieur 13 au bâtiment 1 et le milieu intérieur 15 à la pièce principale 5.

De la même manière, la pièce auxiliaire 7 et la pièce auxiliaire 9 comportent chacune respectivement un ouvrant extérieur 17, 19 permettant dans leur configuration ouverte un échange d'air entre le milieu extérieur 13 et les milieux intérieurs 21, 23 des pièces auxiliaires 7, 9. Ainsi, dans un état d'ouverture de type ouvert ou entrouvert, les ouvrants extérieurs 11, 17, 19 permettent un renouvellement de l'air se trouvant à l'intérieur de la pièce principale 5 et des pièces auxiliaires 7, 9 de la zone 3. L'ouvrant extérieur peut être une fenêtre, une porte, une porte-fenêtre, une trappe de ventilation ou encore un système de ventilation notamment un système de ventilation motorisée. La pièce principale 5 comporte en outre deux ouvrants dits « intérieurs » 25, 27, représentés respectivement en position ouverte et fermée à la figure 1.

Typiquement constitué d'une porte, l'ouvrant intérieur 25, 27 permet dans son état d'ouverture de type ouvert ou entrouvert une communication d'air entre la pièce principale 5 et la pièce auxiliaire 7, respectivement la pièce auxiliaire 9. Cette communication permet, par convection naturelle ou forcée de l'air entre la pièce principale 5 et la pièce auxiliaire 7 et/ou la pièce auxiliaire 9, une circulation d'air et donc un mélange/brassage de l'air, entraînant un échange thermique entre la pièce principale 5 et la pièce auxiliaire 7 et/ou la pièce auxiliaire 9.

Dans son état d'ouverture, l'ouvrant intérieur 25, 27 entraîne une communication sous forme d'un échange d'air entre le milieu intérieur 15 de la pièce principale 5 et le milieu intérieur 21 de la pièce auxiliaire 7, respectivement le milieu intérieur 23 de la pièce auxiliaire 9.

La zone 3 du bâtiment est équipée d'une installation de gestion thermique selon l'invention, plus simplement désignée « installation » dans la suite de la description.

L'installation comporte un premier dispositif de chauffage et/ou de climatisation 29 installé dans la pièce principale 5 et assurant une fonction de confort dans la zone 3 du bâtiment 1. Le premier dispositif de chauffage et/ou de climatisation 29 peut être commandé par une unité de commande 31.

L'unité de commande 31 peut être un thermostat ou tout autre type de dispositif de commande du premier dispositif chauffage et/ou de climatisation 29. L'unité de commande est éventuellement apte à commander un deuxième dispositif de chauffage et/ou de climatisation 30 dans la pièce auxiliaire 7.

L'unité de commande 31 est installée dans la pièce principale 5 et comprend un capteur de température apte à mesurer la température de l'air dans la pièce principale 5.

Selon une disposition de l'invention, l'unité de commande 31 peut comprendre un capteur d'humidité, en complément du capteur de température, apte à mesurer le taux d'humidité de l'air dans la pièce principale 5.

L'unité de commande 31 installée dans la pièce principale 5 peut être utilisée pour piloter une chaudière et/ou au moins un actionneur de chauffage et/ou au moins une vanne thermostatique du premier et/ou du deuxième dispositif de chauffage et/ou de climatisation 29, 30.

Selon une autre disposition de l'invention, l'installation comprend en outre des détecteurs d'état d'ouverture et de fermeture 33 des ouvrants intérieurs 25, 27. Les détecteurs d'état d'ouverture et de fermeture 33 sont agencés au niveau des ouvrants intérieurs 25, 27 assurant une communication entre la pièce principale 5 et les pièces auxiliaires 7, 9. Ainsi, un détecteur d'état d'ouverture et de fermeture 33 équipe une pièce auxiliaire 7, 9 en étant monté au niveau de l'ouvrant intérieur entre la pièce auxiliaire correspondante et la pièce principale. En particulier, chaque détecteur d'état d'ouverture et de fermeture 33 est monté à l'intérieur d'une pièce auxiliaire 7, 9, de sorte à se situer dans l'enceinte de la pièce auxiliaire lorsque l'ouvrant intérieur 25, 27 correspondant est fermé.

Typiquement, chaque ouvrant intérieur est équipé d'un détecteur d'état d'ouverture et de fermeture 33. Chaque détecteur d'état d'ouverture et de fermeture 33 est assigné, par paramétrage, à la pièce auxiliaire qu'il équipe et connu par l'unité de commande 31 par programmation préalable.

De façon connue, le détecteur d'état d'ouverture et de fermeture 33 des ouvrants intérieurs comprennent au moins un élément de détection de position. Cet élément de détection de position peut typiquement être composé de deux parties distinctes, l'une étant positionnée sur le dormant et l'autre sur la partie mobile de l'ouvrant intérieur. L'une des deux parties, par exemple un capteur de proximité, tel qu'une ampoule Reed ou un capteur à effet Hall, coopère ainsi avec l'autre partie, telle qu'un aimant pour définir l'état fermé de l'ouvrant intérieur lorsque les deux parties sont en vis-à-vis. A défaut d'activation du capteur de proximité, l'ouvrant intérieur est considéré ouvert.

Alternativement, le détecteur d'état d'ouverture et de fermeture peut de façon connue comprendre un élément de détection de position sous forme d'un détecteur d'orientation angulaire, par exemple un accéléromètre ou un magnétomètre, adapté pour fournir une information précise sur l'angle d'ouverture de la partie mobile de l'ouvrant intérieur. Ce type de détecteur est davantage précis que lorsqu'il est réalisé à partir d'une ampoule Reed ou d'un capteur à effet Hall, car il permet de prendre en considération l'état d'ouverture de type entrouvert de l'ouvrant intérieur. Le procédé de gestion thermique de l'invention s'en trouve amélioré car les échanges thermodynamiques entre deux pièces adjacentes seront analysés plus finement.

Encore alternativement, l'élément de détection de position du détecteur d'état d'ouverture et de fermeture peut de façon connue être un détecteur optique.

Le détecteur d'état d'ouverture et de fermeture peut également comprendre plusieurs éléments de détection de position, dont les informations combinées permettent de détecter finement l'état d'ouverture et de fermeture de l'ouvrant intérieur qu'il équipe.

Selon l'invention, chaque détecteur d'état d'ouverture et de fermeture 33 comprend un capteur de température intégré. Le capteur de température intégré au détecteur d'ouverture et de fermeture 33 de l'ouvrant intérieur permet de mesurer la température de l'air à l'intérieur de la pièce auxiliaire 7, 9 correspondante.

Dans une réalisation alternative, lorsque l'unité de commande 31 est équipée d'un capteur d'humidité, chaque détecteur d'état d'ouverture et de fermeture 33 peut comprendre un capteur d'humidité en complément du capteur de température, apte à mesurer le taux d'humidité de l'air dans la pièce auxiliaire 7, 9 correspondante.

Le fait d'intégrer le capteur de température et le capteur d'humidité directement dans le détecteur d'état d'ouverture et de fermeture 33 permet de faciliter la mise en place et le paramétrage de l'installation de gestion thermique de l'invention. Aussi, le coût est moindre par rapport à une installation de gestion thermique dans laquelle le détecteur d'état d'ouverture serait dissocié du capteur de température et du capteur d'humidité, ou dans laquelle chaque pièce auxiliaire de la zone à gérer thermiquement serait équipée d'une unité de commande du type de celle équipant la pièce principale. Aussi, compte tenu du fait que le détecteur d'état d'ouverture et de fermeture 33 est monté à proximité immédiate des ouvrants intérieurs, le fait d'intégrer les capteurs de température et d'humidité directement dans le détecteur d'état d'ouverture et de fermeture 33 permet de connaître aisément et de manière fiable et reproductible leur emplacement dans la pièce correspondante. Cela permet de simplifier l'analyse liée à un changement de température.

L'installation de l'invention comprend en outre un moyen de communication entre l'unité de commande 31 et les détecteurs d'état d'ouverture et de fermeture 33. A cet effet, l'unité de commande 31 comprend un dispositif émetteur/récepteur d'ondes radioélectriques. Les détecteurs d'état d'ouverture et de fermeture 33 comprennent quant à eux chacun un au moins un dispositif émetteur d'ondes radioélectriques. De la sorte, les détecteurs d'état d'ouverture et de fermeture 33 fournissent à l'unité de commande 31 des informations relatives à l'état d'ouverture ou de fermeture de l'ouvrant intérieur correspondant, ainsi que les mesures des capteurs qui y sont intégrés, capteurs de température uniquement ou capteurs de température et d'humidité.

Dans la présente invention, il n'est pas nécessaire de prévoir un moyen d'affichage au niveau des détecteurs d'état d'ouverture et de fermeture 33, l'affichage pouvant être déporté au niveau d'un terminal mobile ou de l'unité de commande 31.

Du fait de la distance raisonnable entre l'unité de commande 31 et les détecteurs d'état d'ouverture et de fermeture 33, la puissance radioélectrique nécessaire est également raisonnable, ce qui permet de limiter la taille des détecteurs d'état d'ouverture et de fermeture 33, notamment la taille de sa batterie et de son antenne radioélectrique. Le coût des détecteurs d'état d'ouverture et de fermeture 33, et donc de l'installation de l'invention, est ainsi maîtrisé.

Aussi, l'ouvrant intérieur 25, 27 étant typiquement constitué par une porte, cette porte est typiquement réalisée dans un matériau non-métallique. Ainsi, l'état d'ouverture ou de fermeture de l'ouvrant intérieur 25, 27 influe très peu sur la puissance radioélectrique nécessaire pour l'émission de données entre les détecteurs d'état d'ouverture et de fermeture 33 et l'unité de commande 31, c'est-à-dire entre l'une des pièces auxiliaires 7, 9 et la pièce principale 5.

Selon l'invention, l'installation de gestion thermique comporte en outre un moyen logiciel mettant en œuvre le procédé de gestion thermique qui va être décrit. Le moyen logiciel est installé dans l'unité de commande 31 ou dans un boîtier domotique (non représenté), encore appelé « box » domotique, associé à l'unité de commande.

Lorsque le moyen logiciel est intégré au boîtier domotique, l'unité de commande 31 communique au boîtier domotique tout ou partie des informations dont il dispose et notamment les informations provenant des détecteurs d'état d'ouverture et de fermeture 33. Le boîtier domotique peut communiquer ensuite, via un serveur, certaines informations directement aux utilisateurs à proximité ou à distance de l'installation, par le biais d'un terminal, tel qu'un smartphone.

Un mode d'exécution du procédé de gestion thermique selon l'invention est décrit ci-après en référence à la figure 2.

Dans une première étape E1, le capteur de température de l'unité de commande 31 mesure la température de l'air à l'intérieur de la pièce principale 5. Simultanément, le capteur de température de chaque détecteur d'état d'ouverture et de fermeture 33 mesure la température de l'air à l'intérieur de la pièce auxiliaire 7, 9 correspondante. Les détecteurs d'état d'ouverture et de fermeture 33 envoient à l'unité de commande 31 les valeurs des températures relevées dans chaque pièce auxiliaire correspondante, grâce au moyen de communication. A titre d'exemple, les détecteurs d'état d'ouverture et de fermeture 33 peuvent envoyer à l'unité de commande 31 les valeurs des températures relevées périodiquement, par exemple sur une période temporelle maximale de l'ordre d'une quinzaine de minutes. En variante, les détecteurs d'état d'ouverture et de fermeture 33 peuvent envoyer à l'unité de commande 31 les valeurs des températures dès lors qu'une variation significative de température est détectée.

Dans une deuxième étape E2, les détecteurs d'état d'ouverture et de fermeture 33 détectent l'état des ouvrants intérieurs 25, 27 correspondants. Ces états peuvent être du type ouvert ou du type fermé ou tout autre état intermédiaire entre ouvert et fermé. Dans son état d'ouverture représenté à la figure 1, l'ouvrant intérieur 25 entraîne un échange d'air entre le milieu intérieur 15 de la pièce principale 5 et le milieu intérieur 21 de la pièce auxiliaire 7 correspondante. Dans son état de fermeture représenté à la figure 1, l'ouvrant intérieur 27 limite les échanges d'air entre le milieu intérieur 15 de la pièce principale 5 et le milieu intérieur 23 de la pièce auxiliaire 9 correspondante. Dans l'état d'ouverture maximum de l'ouvrant intérieur, les échanges d'air, notamment par convection naturelle, entre la pièce auxiliaire correspondante et la pièce principale sont favorisés au maximum. Dans l'état de fermeture de l'ouvrant intérieur, ces échanges d'air entre la pièce auxiliaire correspondante et la pièce principale sont limités au maximum. Tout état d'ouverture intermédiaire entraîne un échange d'air intermédiaire. Par exemple, l'équilibre thermique entre la pièce auxiliaire et la pièce principale sera plus long à obtenir si l'ouvrant intermédiaire est dans un état d'ouverture intermédiaire que s'il est dans son état d'ouverture maximum. A titre d'exemple, les détecteurs d'état d'ouverture et de fermeture 33 peuvent envoyer périodiquement à l'unité de commande 31 l'état des ouvrants, par exemple sur une période temporelle maximale de l'ordre d'une heure. En variante, les détecteurs d'état d'ouverture et de fermeture 33 peuvent instantanément communiquer avec l'unité de commande 31, dès lors qu'un changement d'état est détecté.

Dans une troisième étape E3, le procédé de l'invention prévoit une analyse des températures de l'air mesurées et de l'état d'ouverture ou de fermeture dudit au moins un ouvrant intérieur. Cette étape est opérée soit directement par l'unité de commande 31 lorsque celle-ci comporte le moyen logiciel, soit par le boîtier domotique ou « box » domotique lorsque ce dernier comporte le moyen logiciel.

Dans une réalisation, l'étape E3 comporte la mise en œuvre d'une cartographie de la zone 3, cette cartographie étant représentative de l'état d'ouverture ou de fermeture des ouvrants intérieurs 25, 27.

Typiquement, l'étape E3 est exécutée grâce à la comparaison des données obtenues aux étapes E1 et E2 avec des données préenregistrées qui correspondent à des situations préenregistrées dans le moyen logiciel. A titre d'exemples uniquement illustratifs et non limitatifs, les situations suivantes peuvent typiquement être retenues :
- température de la pièce 7 inférieure à celle de la pièce 5 alors que l'ouvrant intérieur 25 est ouvert et que la température de consigne est atteinte dans la pièce 5 ;
- température de la pièce 7 supérieure à celle de la pièce 5 alors que l'ouvrant intérieur 25 est ouvert et que la température de consigne est atteinte dans la pièce 5 ;
- température de la pièce 7 supérieure à celle de la pièce 5 alors que l'ouvrant intérieur 25 est fermé et que la température de consigne est atteinte dans la pièce 5.

Le moyen logiciel peut être enrichi à volonté par différentes situations en fonction du nombre de pièces de la zone, du nombre d'ouvrants intérieurs entre les pièces, du nombre de détecteurs d'état d'ouverture et de fermeture, etc.

Lorsque le moyen logiciel a identifié la situation correspondant aux données relevées lors des étapes E1 et E2, l'étape E3 est alors terminée et une étape E4 d'utilisation des résultats de l'étape d'analyse est initiée. L'étape E4 consiste à indiquer à un utilisateur une ou plusieurs actions correctives à effectuer afin d'améliorer le rendement thermique de la zone traitée par le procédé de l'invention. L'ensemble des situations préenregistrées et des actions correctives correspond à un scénario.

Par exemple, lorsque l'étape E3 indique que l'ouvrant intérieur 27 est en position fermée et que la température de l'air mesurée dans la pièce auxiliaire 9 est supérieure à la température de l'air mesurée dans la pièce principale 5 et que la consigne de température est égale à la température de l'air mesurée dans la pièce principale, l'étape E4 propose à l'utilisateur de couper le chauffage dans la pièce auxiliaire 9 et d'ouvrir temporairement l'ouvrant extérieur 19 et/ou de fermer des protections solaires pour tempérer la pièce auxiliaire 9 sans affecter la pièce principale 5, selon un premier scénario S1.

Selon un autre exemple de scénario S2, lorsque l'étape d'analyse E3 indique que l'ouvrant intérieur 25 est ouvert et retourne une différence entre les températures de l'air mesurées dans la pièce principale 5 et dans la pièce auxiliaire 7 qui dépasse une valeur seuil prédéterminée, l'étape E4 envoie à l'utilisateur une indication pour l'alerter sur le risque de perte énergétique brutal si l'ouvrant intérieur 25 n'est pas refermé. La valeur seuil prédéterminée est typiquement de l'ordre de 1 à 2°C.

Consécutivement au scénario S2, le procédé de l'invention peut avantageusement prévoir une étape E5 d'itération des étapes E1 de mesure et E2 de détection jusqu'à ce que l'étape d'analyse E3 retourne une différence entre les températures de l'air mesurées dans la pièce principale 5 et dans la pièce auxiliaire 7 inférieure à la valeur seuil prédéterminée. Cela permet de vérifier si les valeurs de température mesurées correspondent à une situation transitoire pouvant par exemple survenir consécutivement à l'ouverture de l'ouvrant extérieur 17. Selon une disposition de l'invention, le procédé peut prévoir de mettre en œuvre une temporisation préalablement au déclenchement de l'étape E5 d'itération. Cette temporisation peut notamment être comprise entre quelques dizaines de secondes et quelques minutes, par exemple environ dix secondes à environ cinq minutes.

Les correctifs suggérés par l'étape E4 ont pour but d'indiquer à l'utilisateur quelles sont les actions à effectuer afin d'améliorer le rendement thermique de la zone 3. Lorsque l'utilisateur reçoit de tels correctifs, il peut prendre l'action corrective correspondante, à savoir fermer un ouvrant intérieur, ouvrir un ouvrant extérieur, etc. Le procédé de l'invention peut cependant être automatisé, c'est-à-dire qu'il peut être envisagé, sans sortir du cadre de l'invention, de coupler le procédé de l'invention à une installation domotique, qui pilote notamment de façon automatique l'ouverture et la fermeture des ouvrant intérieurs 25, 27, des ouvrants extérieurs 11, 17, 19, de protections solaires, etc.

Selon une caractéristique de l'installation de l'invention, l'unité de commande 31 est équipée d'un capteur d'humidité apte à mesurer le taux d'humidité de l'air à l'intérieur de la pièce principale 5 et les détecteurs d'état d'ouverture et de fermeture 33 comprennent un capteur d'humidité apte à mesurer le taux d'humidité de l'air à l'intérieur des pièces auxiliaires 7, 9. Dans ce cas, l'étape E1 de mesure du procédé de l'invention prévoit de déterminer, grâce aux mesures fournies par les capteurs d'humidité, les taux d'humidité de l'air à l'intérieur des pièces principales 5 et auxiliaires 7, 9. L'étape E3 d'analyse du procédé confronte ainsi dans ce cas les mesures de températures et les déterminations du taux d'humidité à l'état d'ouverture ou de fermeture des ouvrants intérieurs 25, 27, ceci avant d'indiquer (étape E4) à l'utilisateur une action corrective ou les actions correctives à effectuer. Compte tenu du fait que le procédé utilise ici les données relatives au taux d'humidité en complément de celles relatives à la température, on améliore la nature des actions correctives proposées, ce qui permet d'améliorer encore la gestion thermique de la zone traitée.

Selon une autre disposition du procédé de l'invention, il est possible d'estimer l'état d'ouverture ou de fermeture des ouvrants extérieurs 17, 19 des pièces auxiliaires 7, 9, sans que ces ouvrants extérieurs ne soient nécessairement équipés de détecteur d'état d'ouverture et de fermeture de ces ouvrants. Pour ce faire, l'unité de commande 31 est équipée d'un capteur d'humidité apte à mesurer le taux d'humidité de l'air à l'intérieur de la pièce principale 5 et les détecteurs d'état d'ouverture et de fermeture 33 comprennent un capteur d'humidité apte à mesurer le taux d'humidité de l'air à l'intérieur des pièces auxiliaires 7, 9, et le procédé de l'invention comprend une étape de détermination de l'humidité absolue dans les pièces auxiliaires 7, 9. Une chute de l'humidité absolue dans la pièce auxiliaire 7, respectivement la pièce auxiliaire 9, traduit l'ouverture probable de l'ouvrant extérieur 17, respectivement l'ouverture de l'ouvrant extérieur 19. De manière symétrique, la fermeture de l'ouvrant extérieur 17, 19 de la pièce auxiliaire peut être détectée par la fin de la diminution de l'humidité absolue dans la pièce auxiliaire correspondante. Ainsi, lorsqu'une chute de l'humidité absolue est détectée, le procédé prévoit d'ajouter à l'étape E4 une indication de fermer l'ouvrant extérieur 17 et/ou l'ouvrant extérieur 19, sans avoir installé de détecteur d'état d'ouverture et de fermeture des ouvrants extérieurs 17, 19. L'information étant relayée par le détecteur d'état d'ouverture et de fermeture 33 de la pièce auxiliaire correspondante, vers l'unité de commande 31, en combinaison avec l'état d'ouverture ou de fermeture de l'ouvrant intérieur correspondant, la gestion par l'unité de commande et par le procédé selon l'invention est améliorée.

La gestion combinée de la température et de l'humidité permet de savoir ce qu'il se passe dans les pièces auxiliaires de la zone gérée par le procédé de l'invention. Le nombre de situations préenregistrées et de scénarios dépend du nombre de capteurs installés dans la zone.

Comme il va de soi, la présente invention ne se limite pas aux seules formes de réalisation de ce procédé de gestion thermique et de cette installation de gestion thermique, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention qui est définie par les revendications.

## Revendications

1. Procédé de gestion thermique d'une zone (3) d'un bâtiment (1), ladite zone (3) comportant une pièce principale (5) et au moins une pièce auxiliaire (7, 9) séparée de ladite pièce principale (5) par au moins un ouvrant intérieur (25, 27), ladite zone (3) comportant une installation de gestion thermique comprenant :
- au moins un dispositif de chauffage et/ou de climatisation (29) installé dans la pièce principale ;
- une unité de commande (31) du dispositif de chauffage et/ou de climatisation (29), notamment un thermostat, installée dans ladite pièce principale (5), comprenant au moins un capteur de température apte à mesurer la température de l'air à l'intérieur de ladite pièce principale (5) ;
- au moins un détecteur d'état d'ouverture et de fermeture (33) dudit au moins un ouvrant intérieur (25, 27), comprenant au moins un capteur de température apte à mesurer la température de l'air à l'intérieur de ladite au moins une pièce auxiliaire (7, 9) ;
- un moyen de communication entre ladite unité de commande (31) et ledit au moins un détecteur d'état d'ouverture et de fermeture (33) ;
ledit procédé de gestion thermique comprenant :
- une étape de mesure (E1), par le au moins un capteur de température de l'unité de commande (31) et le au moins un capteur de température du détecteur d'état d'ouverture et de fermeture (33), des températures de l'air à l'intérieur de ladite pièce principale (5) et de ladite au moins une pièce auxiliaire (7, 9) ;
- une étape de détection (E2) de l'état ouvert ou fermé dudit au moins un ouvrant intérieur (25, 27) par le détecteur d'état d'ouverture et de fermeture (33) ;
- une étape d'analyse (E3) des températures de l'air mesurées et de l'état d'ouverture ou de fermeture dudit au moins un ouvrant intérieur (25, 27) ;
- une étape d'utilisation (E4) des résultats de l'étape d'analyse pour indiquer à un utilisateur dudit procédé au moins une action corrective à effectuer visant à améliorer les gains thermiques de ladite zone (3).

2. Procédé selon la revendication 1, **caractérisé en ce que** ladite au moins une action corrective comporte au moins les indications suivantes :
- faire passer ledit au moins un ouvrant intérieur (25, 27) depuis son état ouvert, respectivement fermé, vers son état fermé, respectivement ouvert ; et/ou
- couper l'alimentation d'un dispositif de chauffage et/ou de climatisation (29) dans au moins une pièce auxiliaire (7, 9).

3. Procédé selon l'une des revendications 1 ou 2, **caractérisé en ce que**, lorsque l'étape d'analyse (E3) retourne, d'une part, une différence entre les températures de l'air mesurées à l'intérieur de ladite pièce principale (5) et de ladite au moins une pièce auxiliaire (7, 9) qui dépasse une valeur seuil prédéterminée et, d'autre part, un état d'ouverture dudit au moins un ouvrant intérieur (25, 27), ledit procédé comprend en outre une étape d'itération (E5) des étapes de mesure et de détection jusqu'à ce que l'étape d'analyse retourne une différence entre lesdites températures de l'air mesurées inférieure à ladite valeur seuil prédéterminée.

4. Procédé selon la revendication 3, **caractérisé en ce que** l'étape d'itération (E5) est mise en œuvre après une temporisation, notamment comprise entre environ dix secondes et environ cinq minutes.

5. Procédé selon l'une quelconque des revendications 1 à 4, **caractérisé en ce que**, dans l'étape d'analyse (E3) de l'état d'ouverture ou de fermeture dudit au moins un ouvrant intérieur (25, 27), on effectue une cartographie de la zone (3) représentative de l'état d'ouverture ou de fermeture dudit au moins un ouvrant intérieur (25, 27).

6. Procédé selon l'une quelconque des revendications 1 à 5, dans lequel l'unité de commande (31) comprend en outre au moins un capteur d'humidité apte à mesurer le taux d'humidité de l'air à l'intérieur de ladite pièce principale (5) et dans lequel ledit au moins un détecteur d'état d'ouverture et de fermeture (33) dudit au moins un ouvrant intérieur (25, 27) comprend en outre au moins un capteur d'humidité apte à mesurer le taux d'humidité de l'air à l'intérieur de ladite au moins une pièce auxiliaire (7, 9), ledit procédé étant **caractérisé en ce que** les étapes de mesure (E1) et d'analyse (E3) comportent respectivement la mesure par les capteurs d'humidité des taux d'humidité de l'air à l'intérieur de ladite pièce principale (5) et de ladite au moins une pièce auxiliaire (7, 9), et l'analyse des taux d'humidité de l'air mesurés et de l'état d'ouverture ou de fermeture dudit au moins un ouvrant intérieur (25, 27).

7. Procédé selon l'une quelconque des revendications 1 à 5, dans lequel ledit au moins un détecteur d'état d'ouverture et de fermeture (33) dudit au moins un ouvrant intérieur (25, 27) comprend en outre au moins un capteur d'humidité apte à mesurer le taux d'humidité de l'air à l'intérieur de ladite au moins une pièce auxiliaire (7, 9), ledit procédé étant **caractérisé en ce qu'**il comprend en outre une étape de détermination de l'humidité absolue dans ladite au moins une pièce auxiliaire (7, 9).

8. Procédé selon la revendication 7, **caractérisé en ce que** ladite au moins une action corrective comporte l'indication de fermer au moins un ouvrant extérieur (11, 17, 19) communiquant vers l'extérieur du bâtiment (1) depuis ladite au moins une pièce auxiliaire (7, 9) lorsqu'une chute de l'humidité absolue est détectée lors de l'étape de détermination.

9. Procédé selon l'un des revendications 1 à 8, dans lequel l'étape E3 comporte une comparaison des mesures de températures de l'air mesurées dans la pièce principale et dans la pièce auxiliaire.

10. Installation de gestion thermique d'une zone d'un bâtiment comprenant :
- un dispositif de chauffage et/ou de climatisation (29) destiné à être installé dans une pièce principale de ladite zone ;
- une unité de commande (31) du dispositif de chauffage et/ou de climatisation (29), notamment un thermostat, comprenant au moins un capteur de température destiné à mesurer la température de l'air dans ladite pièce principale ;
- au moins un ouvrant intérieur destiné à séparer la pièce principale d'une pièce auxiliaire de ladite zone ;
- au moins un détecteur d'état d'ouverture et de fermeture (33) dudit au moins un ouvrant intérieur (25, 27), comprenant au moins un capteur de température destiné à mesurer la température de l'air à l'intérieur de ladite pièce auxiliaire ;
- un moyen de communication entre ladite unité de commande (31) et ledit au moins un détecteur d'état d'ouverture et de fermeture (33) ;
- un moyen logiciel mettant en œuvre le procédé de gestion thermique selon l'une des revendications 1 à 5.

11. Installation de gestion thermique d'une zone d'un bâtiment comprenant :
- un dispositif de chauffage et/ou de climatisation (29) destiné à être installé dans une pièce principale de ladite zone ;
- une unité de commande (31) du dispositif de chauffage et/ou de climatisation (29), notamment un thermostat, comprenant au moins un capteur de température apte à mesurer la température de l'air et au moins un capteur d'humidité destiné à mesurer le taux d'humidité de l'air dans ladite pièce principale ;
- - au moins un ouvrant intérieur destiné à séparer la pièce principale d'une pièce auxiliaire de ladite zone ;
- au moins un détecteur d'état d'ouverture et de fermeture (33) dudit au moins un ouvrant intérieur (25, 27), comprenant au moins un capteur de température destiné à mesurer la température de l'air à l'intérieur de ladite pièce auxiliaire et au moins un capteur d'humidité destiné à mesurer le taux d'humidité de l'air à l'intérieur de ladite pièce auxiliaire ;
- un moyen de communication entre ladite unité de commande (31) et ledit au moins un détecteur d'état d'ouverture et de fermeture (33) ;
- un moyen logiciel mettant en œuvre le procédé de gestion thermique selon l'une des revendications 6 à 8.

## Patentansprüche

1. Wärmemanagementverfahren eines Bereichs (3) eines Gebäudes (1), der Bereich (3) umfassend einen Hauptraum (5) und mindestens einen Nebenraum (7, 9), der von dem Hauptraum (5) durch mindestens einen inneren Flügel (25, 27) getrennt ist, der Bereich (3) umfassend eine Wärmemanagementanlage, umfassend:
- mindestens eine Heiz- und/oder Klimatisierungsvorrichtung (29), die in dem Hauptraum installiert ist;
- eine Steuereinheit (31) der Heiz- und/oder Klimatisierungsvorrichtung (29), insbesondere einen Thermostaten, die in dem Hauptraum (5) installiert ist, umfassend mindestens einen Temperatursensor, der geeignet ist, um die Temperatur der Luft im Inneren des Hauptraums (5) zu messen;
- mindestens einen Öffnungs- und Schließzustandsdetektor (33) des mindestens einen inneren Flügels (25, 27), umfassend mindestens einen Temperatursensor, der geeignet ist, um die Temperatur der Luft im Inneren des mindestens einen Nebenraums (7, 9) zu messen;
- eine Kommunikationseinrichtung zwischen der Steuereinheit (31) und dem mindestens einen Öffnungs- und Schließzustandsdetektor (33);
- das Wärmemanagementverfahren umfassend:
- einen Messschritt (E1) durch den mindestens einen Temperatursensor der Steuereinheit (31) und den mindestens einen Temperatursensor des Öffnungs- und Schließzustandsdetektors (33), der Temperaturen der Luft im Inneren des Hauptraums (5) und des mindestens einen Nebenraums (7, 9);
- einen Erfassungsschritt (E2) des Öffnungs- und Schließzustands des mindestens einen inneren Flügels (25, 27) durch den Öffnungs- und Schließzustandsdetektor (33);
- einen Analyseschritt (E3) der gemessenen Temperaturen der Luft und des Öffnungs- oder Schließzustands des mindestens einen inneren Flügels (25, 27);
- einen Verwendungsschritt (E4) der Resultate des Analyseschritts, um einem Benutzer des Verfahrens mindestens eine durchzuführende Korrekturmaßnahme anzugeben, die darauf abzielt, den Wärmegewinn des Bereichs (3) zu verbessern.

2. Verfahren nach Anspruch 1, **dadurch gekennzeichnet, dass** die mindestens eine Korrekturmaßnahme mindestens die folgenden Angaben umfasst:
- Übergehenlassen des mindestens einen inneren Flügels (25, 27) von ihrem jeweils offenen und geschlossenen Zustand in ihren jeweiligen geschlossenen und offenen Zustand; und/oder
- Unterbrechen der Stromzufuhr zu einer Heiz- und/oder Klimatisierungsvorrichtung (29) in mindestens einem Nebenraum (7, 9).

3. Verfahren nach einem der Ansprüche 1 oder 2, **dadurch gekennzeichnet, dass**, wenn der Analyseschritt (E3) einerseits eine Differenz zwischen den Temperaturen der Luft, die im Inneren des Hauptraums (5) und des mindestens einen Nebenraums (7, 9) gemessen werden, die einen vorbestimmten Schwellenwert überschreitet, und andererseits ein Öffnungszustand des mindestens einen inneren Flügels (25, 27) zurückmeldet, das Verfahren ferner einen Wiederholungsschritt (E5) des Mess- und des Erfassungsschritts umfasst, bis der Analyseschritt eine Differenz zwischen den gemessenen Temperaturen der Luft zurückmeldet, die unter dem vorbestimmten Schwellenwert ist.

4. Verfahren nach Anspruch 3, **dadurch gekennzeichnet, dass** der Wiederholungsschritt (E5) nach einer Zeitverzögerung, insbesondere zwischen etwa zehn Sekunden und etwa fünf Minuten, durchgeführt wird.

5. Verfahren nach einem der Ansprüche 1 bis 4, **dadurch gekennzeichnet, dass** in dem Analyseschritt (E3) des Öffnungs- oder Schließzustands des mindestens einen inneren Flügels (25, 27) eine Kartierung des Bereichs (3) durchgeführt wird, der repräsentativ für den Öffnungs- oder Schließzustand des mindestens einen inneren Flügels (25, 27) ist.

6. Verfahren nach einem der Ansprüche 1 bis 5, wobei die Steuereinheit (31) ferner mindestens einen Feuchtigkeitssensor umfasst, der geeignet ist, um den Feuchtigkeitsgehalt der Luft im Innern des Hauptraums (5) zu messen, und wobei der mindestens eine Öffnungs- und Schließzustandsdetektor (33) des mindestens einen inneren Flügels (25, 27) ferner mindestens einen Feuchtigkeitssensor umfasst, der geeignet ist, um den Feuchtigkeitsgehalt der Luft im Inneren des mindestens einen Nebenraums (7, 9) zu messen, wobei das Verfahren **dadurch gekennzeichnet ist, dass** der Mess- (E1) und der Analyseschritt (E3) jeweils die Messung des Feuchtigkeitsgehalts der Luft im Inneren des Hauptraums (5) und des mindestens einen Nebenraums (7, 9) durch die Feuchtigkeitssensoren und die Analyse des gemessenen Feuchtigkeitsgehalts der Luft und des Öffnungs- oder Schließzustands des mindestens einen inneren Flügels (25, 27) umfassen.

7. Verfahren nach einem der Ansprüche 1 bis 5, wobei der mindestens eine Öffnungs- und Schließzustandsdetektor (33) des mindestens einen inneren Flügels (25, 27) ferner mindestens einen Feuchtigkeitssensor umfasst, der geeignet ist, um den Feuchtigkeitsgehalt der Luft im Inneren des mindestens einen Nebenraums (7, 9) zu messen, wobei das Verfahren **dadurch gekennzeichnet ist, dass** es ferner einen Bestimmungsschritt der absoluten Feuchtigkeit in dem mindestens einen Nebenraum (7, 9) umfasst.

8. Verfahren nach Anspruch 7, **dadurch gekennzeichnet, dass** die mindestens eine Korrekturmaßnahme die Angabe umfasst, mindestens einen äußeren Flügel (11, 17, 19) zu schließen, die von dem mindestens einen Nebenraum (7, 9) aus mit der Außenseite des Gebäudes (1) in Verbindung ist, wenn bei dem Bestimmungsschritt ein Abfall der absoluten Feuchtigkeit erfasst wird.

9. Verfahren nach einem der Ansprüche 1 bis 8, wobei Schritt E3 einen Vergleich der Temperaturmessungen der Luft in dem Hauptraum und in dem Nebenraum umfasst.

10. Wärmemanagementanlage eines Bereichs eines Gebäudes, umfassend:
- eine Heiz- und/oder Klimatisierungsvorrichtung (29), die dazu bestimmt ist, in einem Hauptraum des Bereichs installiert zu werden;
- eine Steuereinheit (31) der Heiz- und/oder Klimatisierungsvorrichtung (29), insbesondere einen Thermostaten, umfassend mindestens einen Temperatursensor, der dazu bestimmt ist, die Temperatur der Luft in dem Hauptraum zu messen;
- mindestens einen inneren Flügel, der dazu bestimmt ist, den Hauptraum von einem Nebenraum in diesem Bereich abzutrennen;
- mindestens einen Öffnungs- und Schließzustandsdetektor (33) des mindestens einen inneren Flügels (25, 27), umfassend mindestens einen Temperatursensor, der dazu bestimmt ist, die Temperatur der Luft im Inneren des Nebenraums zu messen;
- eine Kommunikationseinrichtung zwischen der Steuereinheit (31) und dem mindestens einen Öffnungs- und Schließzustandsdetektor (33);
- eine Softwareeinrichtung, die das Wärmemanagementverfahren nach einem der Ansprüche 1 bis 5 implementiert.

11. Wärmemanagementanlage eines Bereichs eines Gebäudes, umfassend:
- eine Heiz- und/oder Klimatisierungsvorrichtung (29), die dazu bestimmt ist, in einem Hauptraum des Bereichs installiert zu werden;
- eine Steuereinheit (31) der Heiz- und/oder Klimatisierungsvorrichtung (29), insbesondere einen Thermostaten, umfassend mindestens einen Temperatursensor, der geeignet ist, um die Temperatur der Luft zu messen, und mindestens einen Feuchtigkeitssensor, der dazu bestimmt ist, den Feuchtigkeitsgehalt in dem Hauptraum zu messen;
- mindestens einen inneren Flügel, der dazu bestimmt ist, den Hauptraum von einem Nebenraum in diesem Bereich abzutrennen;
- mindestens einen Öffnungs- und Schließzustandsdetektor (33) des mindestens einen inneren Flügels (25, 27), umfassend mindestens einen Temperatursensor, der dazu bestimmt ist, die Temperatur der Luft im Inneren des Nebenraums zu messen, und mindestens einen Feuchtigkeitssensor, der dazu bestimmt ist, den Feuchtigkeitsgehalt der Luft im Inneren des Nebenraums zu messen;
- eine Kommunikationseinrichtung zwischen der Steuereinheit (31) und dem mindestens einen Öffnungs- und Schließzustandsdetektor (33);
- eine Softwareeinrichtung, die das Wärmemanagementverfahren nach einem der Ansprüche 6 bis 8 implementiert.

## Claims

1. A thermal management method for an area (3) of a building (1), said area (3) including a main room (5) and at least one auxiliary room (7, 9) separated from said main room (5) by at least one interior opening (25, 27), said area (3) including a thermal management installation comprising:
- at least one heating and/or air conditioning device (29) installed in the main room;
- a control unit (31) of the heating and/or air conditioning device (29), notably a thermostat, installed in said main room (5), comprising at least one temperature sensor able to measure the air temperature inside said main room (5);
- at least one detector of the open and closed state (33) of said at least one interior opening (25, 27), comprising at least one temperature sensor able to measure the air temperature inside said at least one auxiliary room (7, 9);
- a means of communication between said control unit (31) and said at least one detector of the open and closed state (33);
said thermal management method comprising:
- a measurement step (E1), by the at least one temperature sensor of the control unit (31) and the at least one temperature sensor of the detector of the open and closed state (33), of the air temperatures inside said main room (5) and said at least one auxiliary room (7, 9);
- a detection step (E2) of the open or closed state of said at least one interior opening (25, 27) by the detector of the open and closed state (33);
- an analysis step (E3) of the measured air temperatures and the open or closed state of said at least one interior opening (25, 27);
- a step (E4) of using the results of the analysis step to indicate to a user of said method at least one corrective action to be performed aiming to improve the thermal gains of said area (3).

2. The method according to claim 1, **characterized in that** said at least one corrective action includes at least the following indications:
- move said at least one interior opening (25, 27) from its open state, respectively closed, to its closed state, respectively open; and/or
- cut the power supply of a heating and/or air conditioning device (29) in at least one auxiliary room (7, 9).

3. The method according to one of claims 1 or 2, **characterized in that**, when the analysis step (E3) sends, on the one hand, a difference between the air temperatures measured inside said main room (5) and said at least one auxiliary room (7, 9) that exceeds a predetermined threshold value and, on the other hand, an open state of said at least one interior opening (25, 27), said method further comprises an iteration step (E5) of the measurement and detection steps until the analysis step sends a difference between said measured air temperatures lower than said predetermined threshold value.

4. The method according to claim 3, **characterized in that** the iteration step (E5) is implemented after a delay, notably comprised between about ten seconds and about five minutes.

5. The method according to any one of claims 1 to 4, **characterized in that**, in the analysis step (E3) of the open or closed state of said at least one interior opening (25, 27), a mapping of the area (3) representative of the open or closed state of said at least one interior opening (25, 27) is performed.

6. The method according to any one of claims 1 to 5, wherein the control unit (31) further comprises at least one humidity sensor able to measure the humidity level of the air inside said main room (5) and wherein said at least one detector of the open or closed state (33) of said at least one interior opening (25, 27) further comprises at least one humidity sensor able to measure the humidity level of the air inside said at least one auxiliary room (7, 9), said method being **characterized in that** the measurement step (E1) and the analysis step (E3) include respectively the measurement by the humidity sensors of the humidity levels of the air inside said main room (5) and said at least one auxiliary room (7, 9), and the analysis of the measured air humidity levels and the open or closed state of said at least one interior opening (25, 27).

7. The method according to any one of claims 1 to 5, wherein said at least one detector of the open and closed state (33) of said at least one interior opening (25, 27) further comprises at least one humidity sensor able to measure the humidity level of the air inside said at least one auxiliary room (7, 9), said method being **characterized in that** it further comprises a step of determining the absolute humidity in said at least one auxiliary room (7, 9).

8. The method according to claim 7, **characterized in that** said at least one corrective action includes the indication to close at least one exterior opening (11, 17, 19) communicating to the outside of the building (1) from said at least one auxiliary room (7, 9) when a drop in absolute humidity is detected during the determination step.

9. The method according to one of claims 1 to 8, wherein the step E3 includes a comparison of the measurements of air temperature measured in the main room and in the auxiliary room.

10. A thermal management installation for an area of a building comprising:
- a heating and/or air conditioning device (29) intended to be installed in a main room of said area;
- a control unit (31) of the heating and/or air conditioning device (29), notably a thermostat, comprising at least one temperature sensor intended to measure the air temperature in said main room;
- at least one interior opening intended to separate the main room from an auxiliary room of said area;
- at least one detector of the open and closed state (33) of said at least one interior opening (25, 27), comprising at least one temperature sensor intended to measure the air temperature inside said auxiliary room;
- a means of communication between said control unit (31) and said at least one detector of the open and closed state (33);
- a software means implementing the thermal management method according to one of claims 1 to 5.

11. The thermal management installation for an area of a building comprising:
- a heating and/or air conditioning device (29) intended to be installed in a main room of said area;
- a control unit (31) of the heating and/or air conditioning device (29), notably a thermostat, comprising at least one temperature sensor able to measure the air temperature and at least one humidity sensor intended to measure the humidity level of the air in said main room;
- at least one interior opening intended to separate the main room from an auxiliary room of said area;
- at least one detector of the open and closed state (33) of said at least one interior opening (25, 27), comprising at least one temperature sensor intended to measure the air temperature inside said auxiliary room and at least one humidity sensor intended to measure the humidity level of the air inside said auxiliary room;
- a means of communication between said control unit (31) and said at least one detector of the open and closed state (33);
- a software means implementing the thermal management method according to one of claims 6 to 8.
